Europäisches Patentamt

**European Patent Office**

Office européen des brevets

(19)

(11) Numéro de publication: **0 244 281 B1**

# FASCICULE DE BREVET EUROPEEN

(12)

(45) Date de publication de fascicule du brevet:
**27.11.91**

(51) Int. Cl.⁵: **H01G 1/11**

(21) Numéro de dépôt: **87400730.5**

(22) Date de dépôt: **03.04.87**

(54) **Condensateur basse tension autoprotégé.**

(30) Priorité: **29.04.86 FR 8606369**

(43) Date de publication de la demande:
**04.11.87 Bulletin 87/45**

(45) Mention de la délivrance du brevet:
**27.11.91 Bulletin 91/48**

(84) Etats contractants désignés:
**BE CH DE ES GB IT LI SE**

(56) Documents cités:
**BE-A- 736 175**
**DE-A- 3 231 864**
**FR-A- 1 214 833**
**FR-A- 2 492 577**
**US-A- 3 473 088**

(73) Titulaire: **MERLIN GERIN**
**Rue Henri Tarze**
**F-38050 Grenoble Cédex(FR)**

(72) Inventeur: **Theoleyre, Serge**
**Rectiphase - BP No.4**
**F-74370 Pringy(FR)**
Inventeur: **Masset, Daniel**
**Rectiphase - BP No.4**
**F-74370 Pringy(FR)**
Inventeur: **Salsetti, Pascal**
**Rectiphase - BP No.4**
**F-74370 Pringy(FR)**

(74) Mandataire: **Kern, Paul et al**
**Merlin Gerin Sce. Brevets 20, rue Henri Tarze**
**F-38050 Grenoble Cédex(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention est relative à un élément de condensateur selon le préambule de la revendication 1.

Un condensateur de puissance du genre mentionné, à film métallisé, est essentiellement utilisé pour la correction du facteur de puissance en basse tension. Le condensateur est dit autocicatrisant, car la présence de défauts mineurs dans le film diélectrique entraîne un claquage localisé, qui conduit à l'évaporation des électrodes au voisinage du défaut sans dommages pour le film adjacent. Un élément de condensateur est réalisé par l'enroulement de films plastiques métallisés et le condensateur consiste en un assemblage d'éléments bobinés, connectés selon un arrangement série parallèle, fonction de la puissance. Lors de sollicitations anormales, notamment de surtension ou d'une élévation de température, un claquage diélectrique peut détériorer les propriétés d'autocicatrisation du condensateur. L'augmentation résultante du courant, qui traverse l'élément, provoque une élévation de température au voisinage du défaut et une production de gaz de décomposition du film plastique. Sous l'effet de la pression, le boîtier peut éclater. Un dispositif classique de protection consiste à mettre l'ensemble des éléments dans une boîte métallique suffisamment solide pour contenir les gaz émis. Le défaut est mis hors circuit après destruction complète de l'élément affecté du défaut, mais il subsiste un risque de court-circuit interne important et un risque d'explosion. Une autre solution connue consiste à associer à chaque élément de condensateur un fusible électrique qui interrompt le circuit et déconnecte l'élément défectueux lors d'une surintensité. Cette protection est inefficace lorsque le défaut est impédant, donc lorsque le courant de court-circuit est limité.

L'augmentation de pression provoque une déformation du boîtier et il a déjà été proposé dans le document US-A-3.473.088 de prévoir un couvercle déformable ou éjectable sous l'effet de la pression, cette déformation ou éjection arrachant un fil de connexion de l'élément pour assurer sa déconnexion. Cette protection est efficace pour les faibles surintensités, mais elle présente l'inconvénient d'un réamorçage quand la déconnexion a lieu avec des courants de court-circuits importants. Un tel réamorçage provoque l'ouverture ou l'explosion du boîtier avec un risque d'incendie ou tout au moins un fort dégagement de fumée endommageant les équipements voisins. Une variante décrite dans ce document consiste à sectionner l'isolant d'un fil de connexion pour créer un court-circuit, mais le fonctionnement n'est pas fiable.

La présente invention a pour but de permettre la réalisation d'un condensateur autocicatrisant, équipé d'une protection efficace en cas de détérioration de la propriété d'autocicatrisation et ce but est atteint par la mise en oeuvre des caractéristiques des revendications.

La surpression dans le boîtier engendre un court-circuit franc qui est éliminé par le fusible associé à l'élément et incorporé au boîtier ou au capot de fermeture du boîtier de l'élément.

Le contact court-circuiteur peut être une simple lame élastique dont l'extrémité libre est retenue par une butée. Lors d'une libération de la lame, par exemple par effacement de la butée ou par une déformation de la lame sous l'action d'une partie déformable du boîtier, la lame se déplace brusquement en position de fermeture du contact court-circuiteur. La partie déformable du boîtier est, selon un mode de mise en oeuvre préféré de l'invention, une membrane obturant l'un des fonds du boîtier et intercalée entre le boîtier et un capot formant couvercle. Le boîtier, la membrane, et le capot sont avantageusement en matière plastique et leur assemblage étanche est réalisé par une coulée de matière polymérisable.

Le fusible, placé en série de l'élément, est incorporé au capot et ses caractéristiques sont bien entendu appropriées à l'usage du condensateur de puissance. Le fusible doit notamment supporter en permanence le courant nominal et de plus, les courants transitoires d'enclenchement. Il doit également avoir un temps de réponse suffisamment faible pour couper le courant de court-circuit, dû à la fermeture du contact court-circuiteur, avant la rupture du boîtier sous l'effet de la pression. Il est important de prévoir entre la paroi interne du boîtier et l'élément bobiné enrobé un interstice de cheminement des gaz vers la membrane pour provoquer la déformation de cette dernière avant tout risque d'explosion du boîtier sous l'effet d'une surpression locale. La protection combinée par un fusible électrique et par une membrane déformable actionnant un court-circuiteur, assure une déconnexion efficace de l'élément sur tout type de défaut susceptible d'apparaître dans un condensateur autocicatrisant. La parfaite autoprotection de chaque élément évite l'emploi de boîtiers métalliques à haute performance mécanique.

Selon un développement de l'invention, le capot présente une section carrée dans laquelle s'inscrit la section circulaire du boîtier, les bords du capot présentant des moyens de fixation, notamment d'encliquetage à des capots adjacents. Ce système modulaire permet la réalisation de condensateurs ayant un nombre quelconque d'éléments sans faire appel à des châssis ou des systèmes de liaison particuliers.

D'autres avantages et caractéristiques ressortiront plus clairement de la description qui va suivre d'un mode de mise en oeuvre de l'invention, donné à titre d'exemple non limitatif et représenté aux dessins annexés dans lesquels :
- la figure 1 est une vue schématique en coupe axiale d'un élément de condensateur selon l'invention en position normale de fonctionnement ;
- la figure 2 est une vue analogue à celle de la figure 1, montrant l'élément lors d'une surpression interne ;
- la figure 3 est une vue en plan de la membrane de l'élément selon la figure 1 ;
- la figure 4 est une coupe suivant la ligne IV-IV de la figure 3 ;
- la figure 5 est une vue en plan montrant plusieurs capots d'éléments assemblés par encliquetage.

Sur les figures, un élément de condensateur 10 comporte un boîtier cylindrique 12, notamment en matière plastique, dont l'un 14 des fonds est ouvert. A l'intérieur du boîtier 12 est logée une bobine 16 formée par un enroulement de films plastiques métallisés. La bobine est enrobée dans une résine de la manière usuelle et elle présente deux fils de connexion 18, 20, sur la face du côté du fond ouvert 14 du boîtier 12. La bobine 16 est du type à autocicatrisation lors d'un claquage localisé en un point. Ce claquage localisé provoque une évaporation de la métallisation au point de claquage et de ce fait une isolation de cette zone en défaut. La bobine 16 conserve son isolation et la perte de capacité, due à l'évaporation ponctuelle de la métallisation, est pratiquement négligeable. Le film plastique est avantageusement un film de polypropylène métallisée par une couche d'aluminium de zinc ou d'un alliage aluminium zinc.

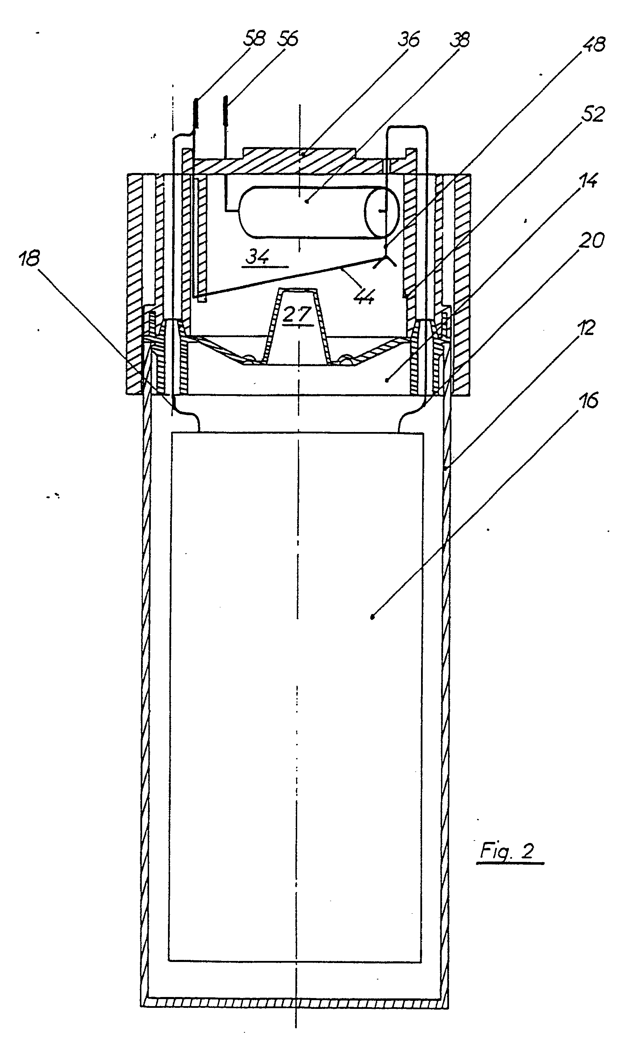

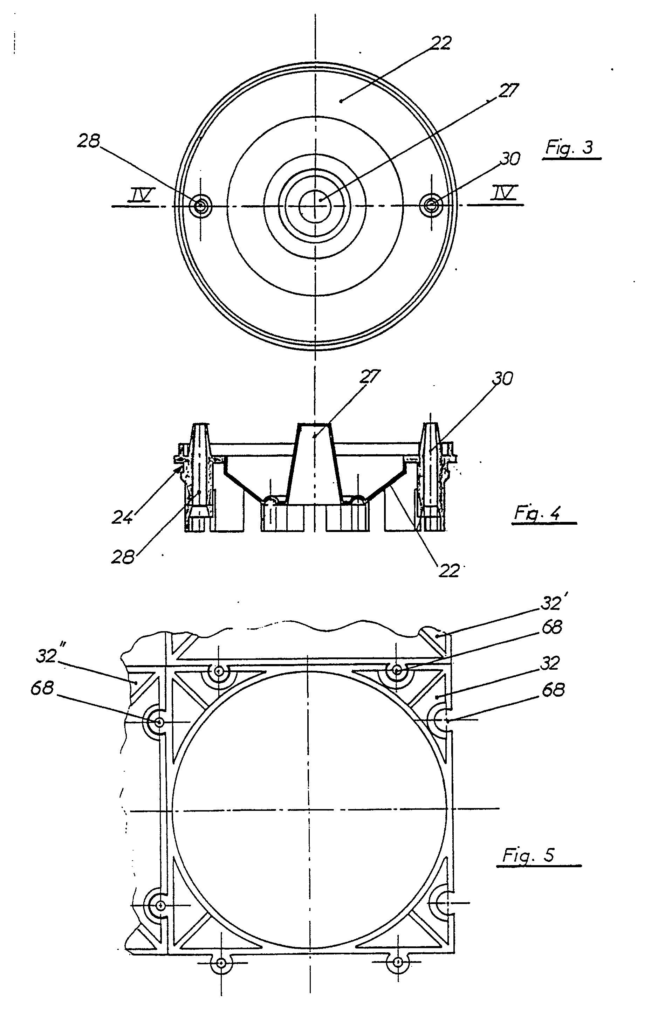

Après mise en place de la bobine 16, le boîtier 12 est coiffé par une membrane 22 représentée en détail sur les figures 3 et 4. La membrane 22 en matière plastique souple présente sur son pourtour une rainure circulaire 24 s'encliquetant sur un rebord 26 du fond du boîtier 12. Cet encliquetage assure une liaison provisoire entre la membrane formant couvercle et le boîtier 12. La partie centrale de la membrane 22 porte une saillie 27 et la partie périphérique des traversées 28, 30, respectivement de passage des conducteurs de connexion 18, 20. Un capot 32 en matière plastique rigide coiffe la membrane 22 en s'emboîtant sur le pourtour externe du fond ouvert 14 du boîtier 12. La partie centrale du capot 32 est creuse pour constituer une chambre 34 dont l'un des fonds est constitué par la partie centrale de la membrane 22 et dont l'autre fond est obturé par un couvercle 36. A l'intérieur ou à l'extérieur de la chambre 34 est diposé un fusible 38 ayant des fils de connexion 40, 42, traversant le couvercle 36. Dans cette chambre 34 est également disposé un contact court-circuiteur constitué par une lame élastique 44, dont l'une des extrémités 46 est rigidement assujettie au capot 32, en l'occurrence à la paroi interne délimitant la chambre 34. La lame élastique 44 constitue le contact mobile du contact court-circuiteur susceptible de coopérer avec un contact fixe 48, porté par le fusible 38. L'élasticité de la lame de contact 44 sollicite cette dernière au contact du contact fixe 48 de la manière représentée à la figure 2.

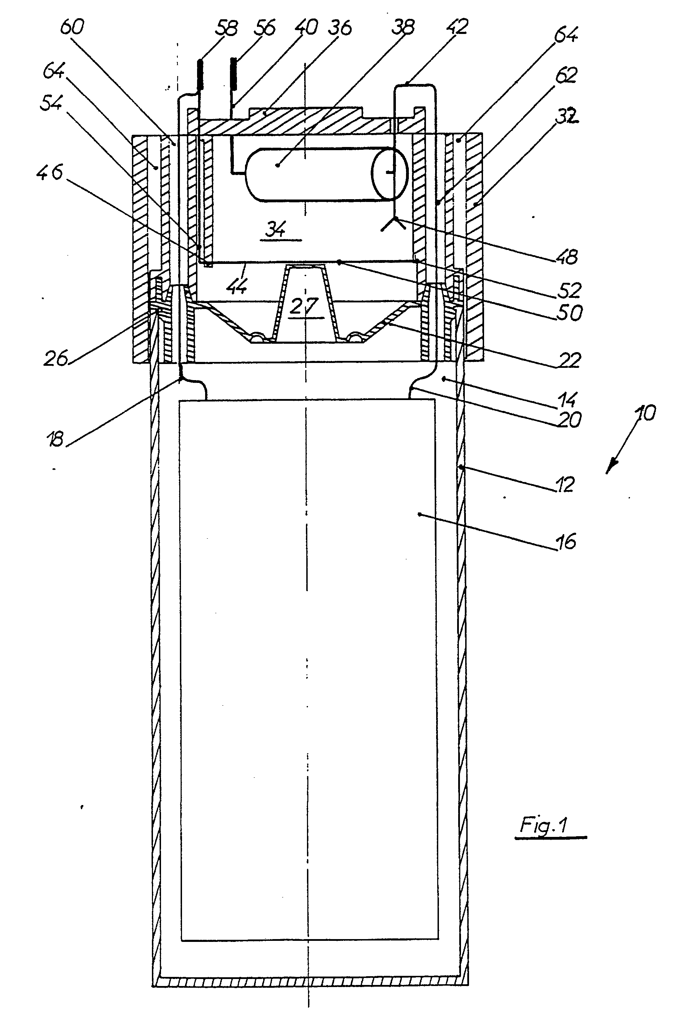

En position normale de fonctionnement, représentée à la figure 1, l'extrémité libre 50 de la lame élastique 44 est retenue par un bec 52 ménagé dans la paroi de la chambre 34. Le bec 52 maintient la lame élastique 44 dans une position rectiligne en regard de la saillie 27 de la membrane 22 et à écartement du contact fixe 48. L'un 56 des conducteurs de raccordement de l'élément 10 est relié au conducteur 40 du fusible 38, tandis que l'autre 58 est relié d'une part au conducteur 18 de la bobine 16 et d'autre part à un conducteur 54 de liaison à la lame élastique 44. Le contact fixe 48 du court-circuiteur est relié au conducteur 42 du fusible 38, lui-même connecté au conducteur 20 de la bobine 16. En se référant à la figure 1, il est facile de voir que la bobine 16 et le fusible 38 sont connectés électriquement en série, tandis que le contact court-circuiteur 44, 48 est ouvert. En position de fermeture du contact court-circuiteur, représentée à la figure 2, ce dernier shunte la bobine 16 en étant connecté en série du fusible 38. La fermeture du contact court-circuiteur 44, 48, provoque un court -circuit franc, éliminé par la fusion du fusible 38.

Le capot 32 présente deux orifices tubulaires 60, 62, en alignement des traversées 28, 30, de la membrane 22 pour le passage des conducteurs 18, 20. Les interfaces entre les orifices 60, 62 et les traversées 28, 30, ont des formes tronconiques conjuguées permettant un emboîtement avec un effet de coincement et de serrage des conducteurs 18, 20, qui les traversent. Sur le pourtour externe du capot 32, sont ménagées des rainures 64 qui s'étendent jusqu'à la zone d'emboîtement du capot 32 sur le boîtier 12. Ces rainures 64 permettent la coulée d'une matière polymérisable, par exemple d'une résine polyuréthane qui solidarise par collage l'ensemble emboîté boîtier 12, membrane 22 et capot 32. Une coulée de matière polymérisable dans les orifices tubulaires 60, 62 assure l'étanchéité des traversées 28, 30. L'intérieur du boîtier 12 peut être rempli d'une résine solidifiée si l'on prend soin de ménager entre le boîtier 12 et l'ensemble bobine 16, résine solidifiée, un intervalle annulaire permettant un échappement des gaz vers la membrane 22. Sur les figures 1 et 2, la matière polymérisable qui remplit les orifices 60, 62, et les rainures 64, n'est pas visible, mais il est facile de comprendre que le boîtier 12 est obturé d'une manière étanche et qu'une surpression interne provoque une déformation de la membrane 22 vers l'extérieur, la saillie 27 se déplaçant vers le haut en engageant la lame élastique 44. Sous l'action de la saillie 27, la lame élastique 44 se courbe jusqu'au moment où son extrémité 50 se dégage du bec 52 et, libérée, se déplace brusquement vers le contact fixe 48 pour fermer le contact court-circuiteur 44, 48.

Le capot 32, de forme carrée, comporte sur des côtés opposés, des éléments d'encliquetage 68, de forme conjuguée, permettant un assemblage avec des capots 32', 32", d'éléments de condensateur associés. Ce mode d'assemblage par encliquetage facilite la réalisation de condensateurs à plusieurs éléments 10, connectés en série parallèle.

L'autoprotection de l'élément condensateur 10 est effectuée de la manière suivante :
- en fonctionnement normal, représenté à la figure 1, le contact court-circuiteur 44, 48, est ouvert et la bobine 16 est connectée en série du fusible 38. Un claquage localisé, dû à un défaut mineur,est éliminé par l'effet d'autocicatrisation résultant de l'évaporation des électrodes au voisinage du défaut. Lors d'une détérioration des propriétés d'autocicatrisation de la bobine 16, par example due à un nombre important de claquages localisés ou à un vieillissement de l'élément, un claquage diélectrique important peut intervenir,lors de sollicitations anormales, provoquant un courant de défaut. La protection est dans ce cas, réalisée selon le type de défaut, soit directement par le fusible 38, dont la fusion déconnecte l'élément 10, soit par l'augmentation de pression dans le boîtier 12 et la déformation de la membrane 22, qui actionne le contact court-circuiteur 44, 48. La fermeture de ce contact court-circuiteur 44, 48 engendre un court-circuit franc et de ce fait, une fusion du fusible 38 assurant la déconnexion de l'élément 10. Cette autoprotection intervient en tous les cas avant toute déformation notable du boîtier 12, évitant tout effet externe. Le boîtier 12 peut ainsi être réalisé en matière plastique et il est inutile de prévoir une cuve métallique de logement de l'ensemble des éléments constitutifs du condensateur. Il est clair que le contact court-circuiteur 44, 48, peut être réalisé d'une manière différente, par exemple par un verrou de maintien de l'extrémité libre 50 de la lame élastique 44, lequel verrou serait libéré par la déformation de la membrane 22 par tout moyen approprié. La lame élastique 44 peut bien entendu être un contact mobile à dispositif d'actionnement brusque bien connu des spécialistes. Il est important que l'actionnement du contact court-circuiteur est réalisé par des forces relativement faibles et que l'élément 10 est rapidement mis hors tension par la fusion du fusible 38.

## Revendications

1. Un élément de condensateur basse tension comprenant :

 - un enroulement (16) bobiné autocicatrisant
 - une enveloppe externe rigide entourant ledit enroulement, ladite enveloppe ayant un boîtier (12) à fond ouvert et une membrane (22) déformable d'obturation dudit fond ouvert,
 - un premier compartiment de ladite enveloppe, confinée d'une manière étanche par le boîtier (12) et la membrane (22) déformable et dans lequel est logé ledit enroulement, un intervalle de passage du gaz est ménagé entre la paroi interne du boîtier (12) et l'enroulement (16) pour faciliter le cheminement des gaz engendrés dans l'élément vers la membrane (22),
 - un premier (18) et un deuxième (20) conducteurs de connexion dudit enroulement bobiné (16), traversant d'une manière étanche ladite membrane (22),
 - un contact court-circuiteur, comportant un contact mobile (44) susceptible de coopérer avec un contact fixe (48), susceptible d'être actionné lors d'une déformation de ladite membrane (22) sous l'action d'une surpression engendrée dans le premier compartiment, pour mettre en court-circuit franc ledit enroulement bobiné (16) lors de sa fermeture, caractérisé en ce qu'il comporte un capot (32) coiffant ladite membrane (22) et un deuxième compartiment confiné par ledit capot et la membrane déformable, dans lequel est disposé ledit court-circuiteur et un fusible de protection (38) disposé dans ledit deuxième compartiment et inséré dans l'un desdits conducteurs de connexion (18,20) en série dudit enroulement et dudit contact du court-circuiteur pour déconnecter ledit élément de condensateur lors d'une surpression provoquant la fermeture du contact court-circuiteur et lors d'une surintensité parcourant ledit enroulement.

2. Un élément de condensateur selon la revendication 1, caractérisé en ce que ledit contact mobile (44) est sollicité élastiquement en position de fermeture, ledit contact court-circuiteur (44,48) comprenant un accrochage (52) de maintien du contact mobile en position d'ouverture, ladite membrane étant agencée pour libérer ledit contact mobile dudit accrochage en cas de surpression dans le premier compartiment, et autoriser la fermeture du contact court-circuiteur.

3. Un élément de condensateur selon la revendication 2, caractérisé en ce que le contact mobile (44) est une lame flexible ayant une extrémité coopérant avec ledit accrochage constitué par une butée fixe (52) ladite membrane (22) coopérant avec ladite lame (44) en cas de surpression dans le premier compartiment pour fléchir la lame et faire échapper ladite extrémité de la butée fixe.

4. Un élément de condensateur selon l'une quelconque des revendications précédentes, caractérisé en ce que le boîtier (12) et le capot (32) sont en un matériau plastique rigide et la membrane (22) en un matériau plastique souple.

5. Un élément de condensateur selon la revendication 4, caractérisé en ce que le boîtier (12) est en forme de cylindre ledit capot (32) s'emboîtant sur le fond ouvert du cylindre.

6. Un élément de condensateur selon la revendication 5, caractérisé en ce que l'étanchéité du boîtier est réalisée par une coulée de matière polymérisable, qui colle les parties en regard du capot (32), de la membrane (22) et du boîtier (12).

7. Un élément de condensateur selon l'une quelconque des revendications précédentes, caractérisé en ce que le boîtier (12) est en forme de cylindre et que le capot (32) est de forme carrée, présentant des moyens d'assemblage conjugués de capots adjacents pour constituer un condensateur à plusieurs éléments assemblés.

## Claims

1. A low voltage capacitor cell comprising:

    - a self-healing wound coil (16),
    - a rigid external housing surrounding said coil, said housing having an open-ended casing (12) and a deformable sealing membrane (22) of said open end,
    - a first compartment of said housing, confined in a leaktight manner by the casing (12) and the deformable membrane (22) and in which said coil is housed, a clearance is arranged between the internal wall of the casing (12) and the coil (16) for the gases generated in the cell to escape to the membrane (22),
    - a first (18) and second (20) connecting conductor of said wound coil (16), passing tightly through said membrane (22),
    - a short-circuiting contact comprising a movable contact (44) capable to cooperate with a stationary contact (48), capable of being actuated when a deformation of said membrane (22) occurs due to an overpressure generated in the first compartment, to bring about a clean short-circuit of said wound coil (16) on closing,

characterized in that it comprises a cover (32) covering said membrane (22), and a second compartment confined by said cover and the deformable membrane, in which is housed said short-circuiter and a protective fuse (38) arranged in said second compartment and inserted in one of said connecting conductors (18, 20) in series with said coil and said short-circuiting contact to disconnect said capacitor cell when an overpressure occurs causing the short-circuiting contact to close and when an overcurrent occurs flowing through said coil.

2. The capacitor cell according to claim 1, characterized in that said movable contact (44) is elastically biased to the closed position, said short-circuiting contact (44, 48) comprising a latch (52) retaining the movable contact in the open position, said membrane being arranged to release said movable contact from said latch, if an overpressure occurs in the first compartment, and to allow the short-circuiting contact to close.

3. The capacitor cell according to claim 2, characterized in that the movable contact (44) is a flexible blade having one end cooperating with said latch formed by a fixed stop (52), said membrane (22) cooperating with said blade (44) if an overpressure occurs in the first compartment to bend the blade and release said end from the fixed stop.

4. The capacitor cell according to anyone of the preceding claims, characterized in that the casing (12) and the cover (32) are made of rigid plastic material and the membrane (22) of flexible plastic material.

5.  The capacitor cell according to claim 4, characterized in that the casing (12) has the shape of a cylinder, said cover (32) fitting on the open end of the cylinder.

6.  The capacitor cell according to claim 5, characterized in that the tightness of the casing is achieved by casting polymerizable material, which sticks the parts opposite the cover (32), the membrane (22) and the casing (12).

7.  The capacitor cell according to anyone of the preceding claims, characterized in that the casing (12) is cylindrical in shape and that the cover (32) is square-shaped, having conjugate assembly means of adjoining covers to form a capacitor with several assembled cells.

**Patentansprüche**

1.  Niederspannungs-Kondensatorelement, welches aufweist:

    -   eine selbstheilende Spulenwicklung (16),
    -   ein die genannte Wicklung umgebendes steifes Aussengehaeuse, wobei das genannte Gehaeuse einen einseitig offenen Behaelter (12) und eine verformbare Membran (22) zum Verschliessen der genannten offenen Seite hat,
    -   eine erste Kammer des genannten Gehaeuses, die durch den Behaelter (12) und die verformbare Membran (22) abdichtend begrenzt ist und in der die genannte Wicklung untergebracht ist, wobei zwischen der Innenwandung des Behaelters (12) und der Wicklung (16) ein Zwischenraum fuer das Stroemen des Gases festgelegt ist, um den Abzug der im Kondensatorelement entwickelten Gase zur Membran (22) zu ermoeglichen,
    -   ein erster (18) und ein zweiter (20) Anschlussleiter der genannten Spulenwicklung (16), die eng anliegend durch die genannte Membran (22) gefuehrt sind,
    -   ein Kurzschliesserkontakt, der einen beweglichen Kontakt (44) aufweist, der mit einem feststehenden Kontakt (48) zusammenarbeiten kann, der bei einer Verformung der genannten Membran (22) durch die Wirkung eines in der ersten Kammer entstandenen Ueberdrucks betaetigt werden kann, um im Moment seines Schliessens die genannte Spulenwicklung (16) glatt kurzzuschliessen, dadurch gekennzeichnet, dass er eine die genannte Membran ueberdeckende Kappe (32) und eine von der genannten Kappe und der verformbaren Membran nach aussen begrenzte zweite Kammer aufweist, in der der genannte Kurzschliesser angeordnet ist sowie eine Schutzschmelzsicherung (38), die in der genannten zweiten Kammer festgelegt und in einen der genannten, in Serie mit der genannten Wicklung und dem genannten Kurzschliesserkontakt geschalteten Anschlussleiter eingefuegt ist, um bei einem das Schliessen des Kurzschliesserkontaktes verursachenden Ueberdruck und bei einem in der genannten Wicklung fliessenden Ueberstrom das genannte Kondensatorelement abzuschalten.

2.  Kondensatorelement nach Anspruch 1, dadurch gekennzeichnet, dass der genannte bewegliche Kontakt (44) eine elastische Spannung in Richtung Schliessstellung erfaehrt, wobei der genannte Kurzschliesserkontakt (44,48) einen den beweglichen Kontakt in Oeffnungsstellung haltenden Sperrhaken (52) aufweist, wobei die genannte Membran entsprechend ausgebildet ist, um den genannten beweglichen Kontakt im Fall eines Ueberdrucks in der ersten Kammer vom genannten Sperrhaken zu loesen und das Schliessen des Kurzschliesserkontaktes zu erlauben.

3.  Kondensatorelement nach Anspruch 2, dadurch gekennzeichnet, dass der bewegliche Kontakt (44) ein biegsamer Streifen ist, bei dem ein Ende mit dem genannten, aus einem festen Anschlag (52) gebildeten Sperrhaken zusammenarbeitet, wobei die genannte Membran (22) mit dem genannten Streifen (44) im Fall eines Ueberdrucks in der ersten Kammer zusammenarbeitet, um den Streifen zu biegen und das genannte Ende vom festen Anschlag zu loesen.

4.  Kondensatorelement nach irgendeinem der vorstehenden Ansprueche, dadurch gekennzeichnet, dass der Behaelter (12) und die Kappe (32) aus einem harten Kunststoff gefertigt sind und die Membran (22) aus einem nachgiebigen Kunststoff ist.

5.  Kondensatorelement nach Anspruch 4, dadurch gekennzeichnet, dass der Behaelter (12) die Form eines Zylinders hat, wobei die genannte Kappe (32) an dem offenen Ende des Zylinders eingepasst ist.

6. Kondensatorelement nach Anspruch 5, dadurch gekennzeichnet, dass die Dichtheit des Behaelters durch das Vergiessen mit polymerisierbarem Material erreicht wird, das die sich gegenueberliegenden Flaechen der Kappe (32), der Membran (22) und des Behaelters (12) verklebt.

7. Kondensatorelement nach irgendeinem der vorstehenden Ansprueche, dadurch gekennzeichnet, dass der Behaelter (12) die Form eines Zylinders hat und dass die Kappe (32) eine quadratische Form hat, wobei sie sich ergaenzende Mittel zur Verbindung von aneinander angrenzenden Kappen aufweist, um einen Kondensator mit mehreren miteinander verbundenen Elementen zu bilden.

Fig.1

Fig. 2

Fig. 3

Fig. 4

Fig. 5